# EUROPEAN PATENT APPLICATION

(11) **EP 4 708 839 A1**
(43) Date of publication of application: **11.03.2026**
(21) Application number: 25200568.1
(22) Date of filing: 05.09.2025
(51) Int. Cl.: H04N 1/00, G06F 3/12, G06T 7/00

(54) **INSPECTION SYSTEM, AND METHOD OF CONTROLLING THE INSPECTION SYSTEM**

(30) Priority: 10.09.2024 JP 2024156838
(71) Applicant: Canon Kabushiki Kaisha, Tokyo, 146-8501 (JP)
(72) Inventor: ICHIHASHI, Yukichika, Tokyo (JP)
(74) Representative: WESER & Kollegen Patentanwälte PartmbB

(57) **Abstract**

An inspection system obtains respective scanned images by reading a first side and a second side of a printed material, and inspects the printed material by comparing the respective obtained scanned images with reference images. In a case where a front and back coincidence inspection is set, the inspection system designates (S902) an inspection area to be subject to the front and back coincidence inspection, and switches (S903) between displaying a state in which a first inspection area of the first side to be subjected to the front and back coincidence inspection is selected and a state in which a second inspection area of the second side to be subjected to the front and back coincidence inspection is selected, in accordance with an operation of a user.

## Description

### TECHNICAL FIELD

The present disclosure relates to an inspection system, and a method of controlling the inspection system.

### BACKGROUND

Conventionally, inspection to confirm whether printed materials are correctly printed has been manually performed, but in recent years, inspection apparatuses that automatically perform inspection of printed materials as post-processing of printers have been used. In such inspection apparatuses, it is also possible to inspect variable area portions (variable data) such as character strings and barcodes in variable printing. Such inspection includes, for example, data legibility inspection to confirm whether a character string or barcode is legible and data collating inspection to compare a read result of a character string or barcode with correct answer data. In the following, data legibility inspection and data collating inspection are referred to as data inspection. In addition, one kind of data inspection is front and back coincidence inspection for inspecting whether images are correctly printed on the front and back sides of a printed material.

Japanese Patent Laid-Open No. 2022-69482 describes front and back coincidence inspection in which a data inspection area is manually set on each of the front and back preview images and whether read results of data inspection areas set on the front and back sides coincide is confirmed.

However, in the method of Japanese Patent Laid-Open No. 2022-69482, first, when performing settings for front and back coincidence inspection, settings are performed for each of the front and back sides. Then, when confirming or changing the settings, it is necessary to change the inspection area of the front side preview image and then search for and set a corresponding inspection area in the back side preview image. Therefore, there is a problem that a heavy burden is placed on the operator when performing settings for front and back coincidence inspection, changing the settings, and the like.

### SUMMARY

Embodiments of the present disclosure eliminate the above-mentioned issues with conventional technology.

A feature of embodiments of the present disclosure is to provide a technique that allows easy setting of an inspection area in front and back coincidence inspection.

The present disclosure in its first aspect provides an inspection system as specified in claim 1. Optional features are specified in claim 2 to 18.

The present disclosure in its second aspect provides a method of controlling an inspection system as specified in claim 19. Optional features are specified in claims 20.

Further features of the various embodiments will become apparent from the following description of exemplary embodiments with reference to the attached drawings. The following descriptions of embodiments are described by way of example.

### BRIEF DESCRIPTION OF THE DRAWINGS

The accompanying drawings, which are incorporated in and constitute a part of the specification, illustrate embodiments of the disclosure and, together with the description, serve to explain the principles of the disclosure.
FIG. 1 is a diagram illustrating a configuration of an inspection system including an inspection apparatus according to a first embodiment of the present disclosure.
FIG. 2 is a block diagram for describing a hardware configuration of an image forming apparatus according to the first embodiment.
FIG. 3 is a block diagram for describing a hardware configuration of an inspection apparatus according to the first embodiment.
FIG. 4 is a flowchart for explaining processing from registration work before the start of inspection to inspection execution by the inspection apparatus according to the embodiment.
FIG. 5 depicts a view illustrating an example of a job management screen displayed on a UI unit of the inspection apparatus according to the first embodiment.
FIG. 6 depicts a view illustrating an example of an inspection setting screen displayed on the UI unit of the inspection apparatus according to the first embodiment.
FIG. 7 is a flowchart for explaining processing for when a target area generation button is pressed in the inspection apparatus according to the first embodiment.
FIGS. 8A to 8C depict views for explaining an example of creation of a target area in front and back coincidence inspection in the embodiment.
FIG. 9 is a flowchart for explaining processing for when a move-to-target-area button is pressed in the inspection apparatus according to the first embodiment.
FIGS. 10A and 10B depict views respectively illustrating examples of transition in the inspection setting screen when an inspection target area is moved in the first embodiment.
FIGS. 11A and 11B depict views respectively illustrating examples of display of a list of inspection areas.
FIG. 12 is a flowchart for explaining a method of confirming inspection settings by the inspection apparatus according to the first embodiment.
FIGS. 13A to 13C depict views respectively illustrating examples of a screen for displaying an inspection result in the inspection apparatus according to the first embodiment.
FIGS. 14A and 14B are schematic diagrams for describing an example of the order in which reference images are transferred and the front and back at the time of actual printing according to a second embodiment.
FIG. 15 depicts a view illustrating an example of an inspection setting screen displayed on the UI unit of the inspection apparatus according to a third embodiment.
FIG. 16 is a flowchart for explaining processing when the move-to-target-area button is pressed in the inspection apparatus according to the third embodiment.

### DESCRIPTION OF THE EMBODIMENTS

Example embodiments of the present disclosure will be described hereinafter in detail, with reference to the accompanying drawings. It is to be understood that the following embodiments are not intended to limit the claims of the present disclosure, and that not all of the combinations of the aspects that are described according to the following embodiments are necessarily required with respect to the means to solve the issues according to the present disclosure. Further, in the accompanying drawings, the same or similar configurations are assigned the same reference numerals, and redundant descriptions are omitted. Note that in the following description, an image forming apparatus is also called a multi-function peripheral (MFP) in some cases.

### [First Embodiment]

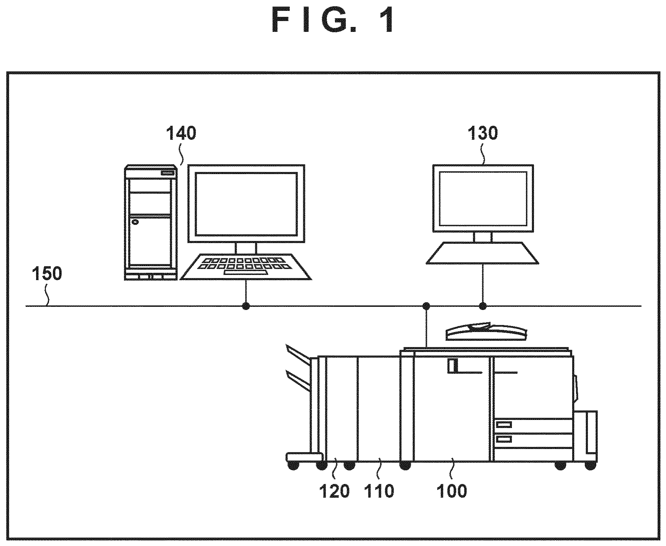

FIG. 1 is a diagram illustrating a configuration of an inspection system including an inspection apparatus according to a first embodiment of the present disclosure. The inspection system includes an image forming apparatus 100, an inspection apparatus 110, a finisher 120, a client PC 130, and a print server 140, and the image forming apparatus 100, the client PC 130, and the print server 140 are connected via a network 150.

The image forming apparatus 100 performs printing based on various types of input data, such as print data transmitted from the client PC 130 or the print server 140. The print server 140 can manage print jobs, perform rasterizing (RIP) processing on print data to create raster images, and transmit the raster images to the image forming apparatus 100.

Further, in the first embodiment, the printing apparatus will be described as an image forming apparatus, such as an multifunction peripheral (MFP), but the present disclosure is not limited thereto and may be a recording apparatus that records (prints) on a recording medium. For example, it may be an apparatus that prints on metal.

The inspection apparatus 110 inspects whether there is a defect (sometimes referred to as image abnormality or image defect) in printed materials that are printed by the image forming apparatus 100 and conveyed sequentially. Here, a defect is something that decreases the quality of a printed material, and includes, for example, stains caused by a coloring material adhering to unintended areas during printing, color omissions caused by not enough coloring material adhering to intended areas, and the like.

Further, the inspection apparatus 110 inspects variable area portions in variable printing, which includes variable area portions such as character strings, one-dimensional codes (e.g., barcodes), and two-dimensional codes. Such inspection includes, for example, data legibility inspection to confirm whether a character string or barcode is legible and data collating inspection to compare a read result of a character string or barcode with a correct answer. Furthermore, front and back coincidence inspection to confirm whether read results of data inspection areas set on the front and back sides coincide is also included. That is, the inspection apparatus 110 performs printed image inspection for detecting a defect of a pattern portion of a printed material, as well as data inspection, which includes data legibility inspection and data collating inspection. An inspection processing unit that performs printed image inspection and data inspection does not necessarily have to be in the inspection apparatus 110, and for example, configuration may be taken so as to perform such inspection processing by an information processing apparatus (not illustrated) that serves as an inspection PC connected to the inspection apparatus 110 so as to be capable of communication. Further, in the embodiment, barcode inspection refers to inspection in which two-dimensional barcodes can be inspected in addition to one-dimensional barcodes. In addition, the inspection system according to the embodiment is assumed to include the inspection apparatus 110, which inspects at least the printed materials.

The finisher 120 receives a printed material that has been inspected by the inspection apparatus 110, switches the discharge destination of the printed material based on the inspection result of the inspection apparatus 110, performs post-processing (book binding, stapling, or the like) on the printed materials as necessary, and discharges the printed materials.

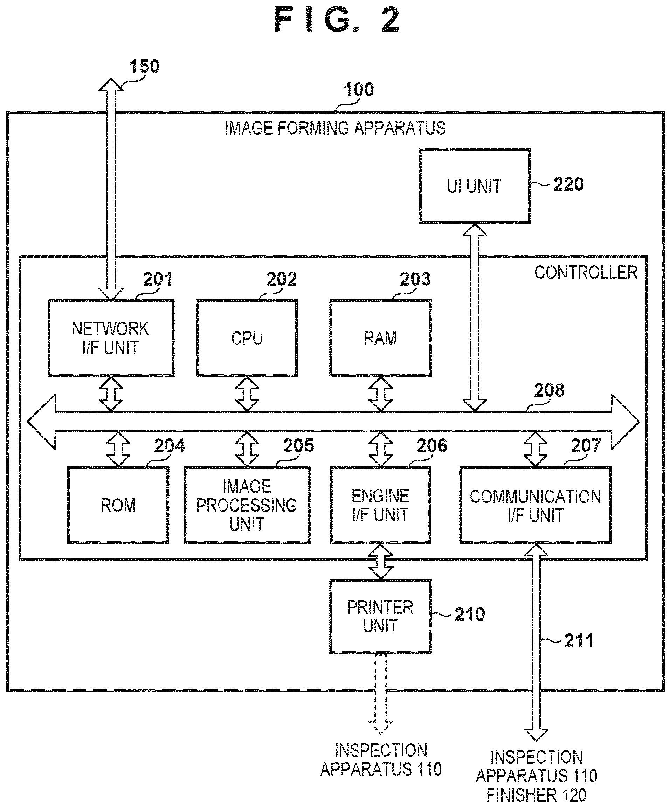

The image forming apparatus 100 is connected to the client PC 130 and the print server 140 via the network 150, and is further connected to the inspection apparatus 110 and the finisher 120 via a communication cable 211 (FIG. 2).

In the embodiment, description will be given using an in-line inspection apparatus that performs image formation, inspection, post-processing, and discharge from start to finish as an example, but there is no intention to limit the present disclosure. Further, the network 150 may be wired or wireless.

FIG. 2 is a block diagram for describing a hardware configuration of the image forming apparatus 100 according to the first embodiment.

A controller 200 receives image data or document data via the network 150 and converts the received image data or document data to print data. A printer unit 210 generates a printed material obtained by performing printing on a recording sheet (paper or sheet) based on the print data. A user interface (UI) unit 220 including a display and keys and the like, displays a screen, and also accepts instructions such as selection of paper information for the image forming apparatus 100 from an operator. The image forming apparatus 100 includes the above controller 200, printer unit 210, and UI unit 220.

Next, a configuration of the controller 200 will be described.

A network interface (I/F) unit 201 transmits and receives data to and from the client PC 130 and the print server 140 via the network 150. A CPU 202 performs control of the entire image forming apparatus 100 by deploying a program stored in a ROM 204 into a RAM 203 and executing the program. The RAM 203 provides a work area for when the CPU 202 executes various commands and is also used as a primary storage area for various kinds of data. The ROM 204 stores a boot program executed by the CPU 202 at startup, program data for controlling the operation of the image forming apparatus 100, setting data of the controller 200, and the like. An image processing unit 205 performs Raster Image Processing (RIP) for converting image data or document data received from the network 150 to print data. In the first embodiment, the RIP processing does not need to be performed by the image processing unit 205, and for example, configuration may be taken so as to perform the RIP processing by the print server 140, which is connected to the image forming apparatus 100 so as to be capable of communication. Further, the functions of the image processing unit 205 may be achieved by the CPU 202 or an ASIC (not illustrated) executing a program.

An engine interface (I/F) unit 206 transmits print data to the printer unit 210, and also obtains the state of the printer unit 210 and transmits it to the CPU 202. A communication I/F unit 207 communicates with the inspection apparatus 110 and the finisher 120 via the communication cable 211. Each of the above units is connected to the CPU 202 via an internal bus (system bus) 208.

The image data or document data created on the client PC 130 or the print server 140 on the network 150 is transmitted as PDL data to the image forming apparatus 100 via the network 150 (e.g., a Local Area Network). Configuration may be taken such that a print job, which includes the image data or document data and the like, is transmitted to the information processing apparatus (not illustrated) via a network and managed by the information processing apparatus. Configuration may be taken such that the print job is then transmitted from the information processing apparatus to the image forming apparatus 100 via the network 150 for the image forming apparatus 100 to perform processing for printing on paper.

The PDL data transmitted from the client PC 130 or the print server 140 is stored in the RAM 203 via the network I/F unit 201. Further, print instructions by an operator via the UI unit 220 are stored in the RAM 203 via the internal bus 208. The printing instructions by the operator include, for example, selection of a paper type or the like.

The image processing unit 205 obtains the PDL data stored in the RAM 203 and performs image processing for converting it into print data. The image processing for converting PDL data into print data is, for example, rasterizing the PDL data to convert it into multi-valued bitmap data, and performing screen processing or the like, for example, to convert it into binary bitmap data. The binary bitmap data thus obtained by the image processing unit 205 is transmitted via the engine I/F unit 206 to the printer unit 210.

The printer unit 210 prints on a sheet using a color material such as toner, for example, based on the received binary bitmap data. At this time, the CPU 202 issues an instruction to the printer unit 210 based on the print instructions by the operator stored in the RAM 203. For example, when there has been an instruction to print on coated paper from the operator, the CPU 202 instructs the printer unit 210 to feed paper from a paper cassette (not illustrated) in which coated paper is stored in the image forming apparatus 100. In this way, a full color image is formed on paper by the CPU 202 controlling the above various processes from receiving PDL data to printing on paper.

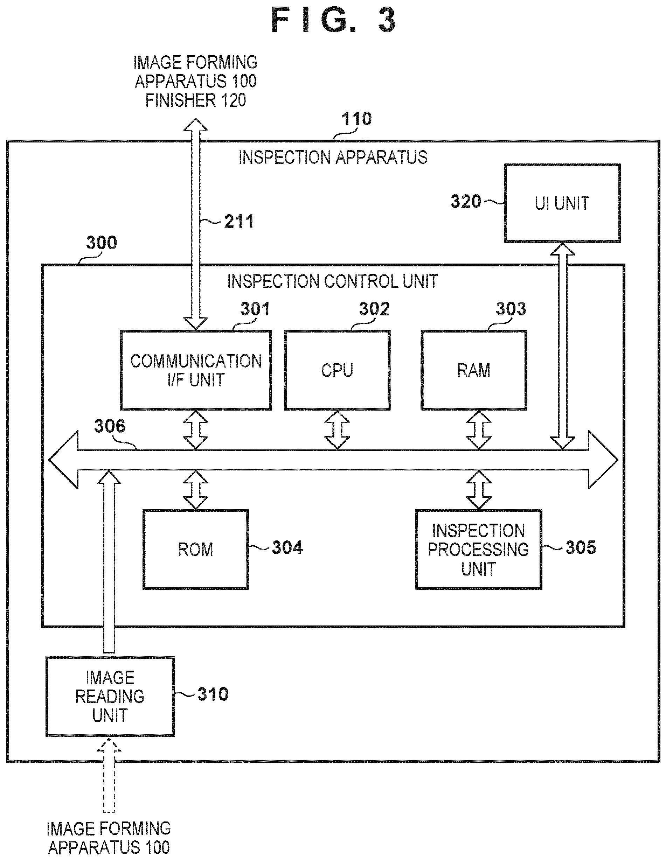

FIG. 3 is a block diagram for describing a hardware configuration of the inspection apparatus 110 according to the first embodiment.

An inspection control unit 300 controls the entire inspection apparatus 110, and also controls inspection processing for inspecting whether there is a defect in a printed material.

An image reading unit 310 reads both sides of a printed material conveyed from the image forming apparatus 100. The image reading unit 310 generates a scanned image (read sheet) by reading the printed material. A UI unit 320 is a UI unit for an operator to perform settings for the inspection apparatus 110 and for displaying inspection results to the operator. Here, settings for the inspection apparatus 110 to be performed by the operator include inspection items for what defects to inspect when inspecting the printed material. The inspection items, for example, designate to detect the presence or absence of circular defects (spots), linear defects (streaks), and the like. The inspection apparatus 110 includes the above inspection control unit 300, image reading unit 310, and UI unit 320. In the first embodiment, the UI unit 320 includes a display unit that displays a screen and a display control unit that controls the screen displayed on the display unit. The settings for the inspection apparatus 110 and the display of inspection results performed by the UI unit 320, and the like may be displayed or instructed on external apparatuses, such as the above UI unit 220 of the image forming apparatus 100, an inspection PC (not illustrated), and an information processing apparatus (not illustrated).

Next, a configuration of the inspection control unit 300 will be described.

A communication interface (I/F) unit 301 transmits and receives data to and from the image forming apparatus 100 and the finisher 120 via the communication cable 211. A CPU 302 performs control of the entire inspection apparatus 110 by deploying a program stored in a ROM 304 into a RAM 303 and executing the program. The RAM 303 provides a work area for when the CPU 302 executes various commands and is also used as a primary storage area for various kinds of data. The ROM 304 stores a boot program executed by the CPU 302 at startup, program data for controlling the operation of the inspection apparatus 110, setting data of the inspection control unit 300, and the like. A correct answer CSV file, which will be described later, is also stored in the ROM 304. An inspection processing unit 305 inspects whether there is a defect in a printed material. Each of the above units is connected via an internal bus 306. Further, the inspection processing unit 305 is not limited to a hardware configuration, and its functions may be realized by the CPU 302 deploying a program stored in the ROM 304 and executing the program.

Next, an overview of "printed image inspection", "data inspection", and "front and back coincidence inspection" in an inspection function of the inspection apparatus 110, which will be described in the first embodiment, will be described.

First, an overview of "printed image inspection" performed by the inspection apparatus 110 will be described.

The inspection apparatus 110 reads a printed material conveyed from the image forming apparatus 100 by the image reading unit 310 and obtains a scanned image (read image) of the inspection target printed material. The scanned image of the inspection target thus obtained is stored in the RAM 303. Then, the inspection apparatus 110 uses the inspection processing unit 305 to obtain a difference value by comparing a reference image stored in the RAM 303 in advance as a correct answer image with the scanned image of the inspection target. Next, the inspection apparatus 110 inspects whether there is a defect in the image of the printed material by comparing, for each pixel, the obtained difference value with the inspection threshold of each inspection item (e.g., contrast and size). The results of the inspection are stored in the RAM 303, and for example, information on whether there is a defect in the printed material, the type of the detected defect (spot or streak), the position information of the defect at the time of display on the UI unit 320, and the like are stored.

Next, an overview of "data inspection" performed by the inspection apparatus 110 will be described.

The inspection apparatus 110 reads printed materials conveyed sequentially from the image forming apparatus 100 by the image reading unit 310 and obtains scanned images of the inspection target printed materials. The obtained scanned images of the inspection targets are stored in the RAM 303. Then, the inspection processing unit 305 of the inspection apparatus 110 first performs extraction processing for extracting data from a character string, a barcode, or a two-dimensional barcode in a scanned image. This is performed using a preset glyph font for character recognition (OCR) or barcode standard, and OCR processing is performed for characters and decoding processing is performed for barcodes.

In data inspection, first, it is inspected whether a character string or barcode in an area set for data inspection is legible. If legible, it is determined to be OK, and if illegible, it is determined to be NG. In addition, data collating inspection for verifying whether the read character string or barcode data, which is extracted data, coincides with corresponding data (correct answer data) of a correct answer CSV file prepared in advance can be performed. Here, as a result of collating inspection, if the pieces of data coincide, it is determined to be OK, and if the pieces of data do not coincide, it is determined to be NG. The results of the inspection are stored in the RAM 303, and for example, character string or barcode data read from the printed material, the result of comparison with correct answer data, the position information of the read characters or barcode at the time of display on the UI unit 320, and the like are stored in the RAM 303.

Lastly, an overview of "front and back coincidence inspection" performed by the inspection apparatus 110 will be described.

Similar to data inspection, the inspection apparatus 110 performs extraction processing for reading a printed material and extracting data from a character string, a barcode, or a two-dimensional barcode in each read scanned image.

The image reading unit 310 includes two reading sensors, one for the front and one for the back, such that both sides of a printed medium can be read simultaneously. An image read by the front reading sensor is data of the front side, and an image read by the back reading sensor is data of the back side. In front and back coincidence inspection, it is determined whether pieces of information indicated by the corresponding inspection areas of the respective pieces of data obtained from the front and back sides coincide. If they coincide, it is determined to be OK, and if they do not coincide, it is determined to be NG. The data used here refers to general digitized information and includes barcode images digitized by barcode decoder processing and character images digitized by OCR processing. Further, pieces of image data obtained by binarizing digital images by image processing may be compared with each other. In addition, regarding data coincidence determination, if a form printing system or the like is considered as an example, perfect coincidence is often desired. However, the present disclosure need not be limited to this and may include partial coincidence or semantic coincidence (ambiguous coincidence), and this should not be restrictive.

The results of the inspection are stored in the RAM 303, and for example, character string or barcode data read from the printed material, the result of front and back coincidence/non-coincidence, the position information of the read characters or barcode at the time of display on the UI unit 320, and the like are stored in the RAM 303.

After completion of the above "printed image inspection", "data inspection", or "front and back coincidence inspection", the inspection apparatus 110 instructs the UI unit 320 to display the inspection results stored in the RAM 303 by the CPU 302. By the inspection results thus being displayed on the UI unit 320, the operator can recognize the inspection results.

Further, when a defective printed material is generated or a defect occurs consecutively over a certain quantity, the inspection apparatus 110 transmits information based on the above inspection results to the image forming apparatus 100 via the communication I/F unit 301.

In the image forming apparatus 100, the controller 200 receives information that a defective printed material has been generated via the communication I/F unit 207. When the controller 200 receives the above information, the CPU 202 instructs the printer unit 210 to stop printing. The image forming apparatus 100 stops the printing operation when the printer unit 210 is instructed to stop printing by the controller 200.

Furthermore, the inspection apparatus 110 transmits information to the finisher 120 via the communication I/F unit 301 based on the inspection results stored in the RAM 303. The information transmitted to the finisher 120 is information indicating whether there is a defect in the printed material. The finisher 120 uses the received information and discharges non-defective printed materials to a normal output tray and defective printed materials to another tray different from the normal output tray.

Next, the entire flow from registration work before the start of inspection to inspection execution in the inspection apparatus 110 will be described.

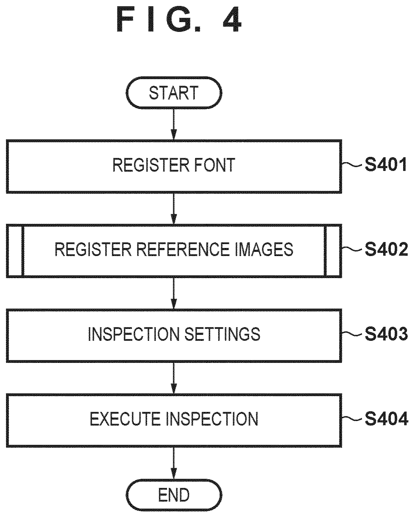

FIG. 4 is a flowchart for explaining processing from registration work before the start of inspection to inspection execution by the inspection apparatus 110 according to an embodiment. The processing indicated in this flowchart is realized by the CPU 302 of the inspection apparatus 110 deploying program code stored in the ROM 304 into the RAM 303 and executing the program code.

In step S401, the CPU 302 registers a glyph font. The glyph font registered here is used at the time of data inspection and front and back coincidence inspection. The glyph font is data that is necessary for character recognition (OCR) performed at the time of data inspection and in which character glyph images and character codes are associated.

Regarding a glyph font creation procedure, the inspection apparatus 110 first waits in glyph font image read mode and receives a glyph font creation print job from the client PC 130. Then, when the image forming apparatus 100 executes printing in accordance with the glyph font creation print job, the inspection apparatus 110 detects the conveyance of a printed material from the image forming apparatus 100. Then, the printed material is scanned by the image reading unit 310, and the scanned image is stored in the RAM 303 of the inspection apparatus 110. Then, characters for OCR are cut out from the scanned image one character at a time, and the operator inputs character codes for the cutout character images, and a glyph font can thereby be created. The glyph font thus created is stored in the RAM 303 of the inspection apparatus 110. At this time, an arbitrary name or tag that uses font name, size, and the like is added to the glyph font such that it can be selected at the time of settings for "data inspection".

A method of registering a glyph font has been described here but is not limited thereto, and any method may be used as long as it is a method of creating and registering data in which a character code is associated with each character image cut out from the scanned image. A case where data inspection is not performed and only printed image inspection is performed is also possible. In this case, step S402 may be transitioned to without performing step S401.

Next, the processing proceeds to step S402, and the CPU 302 registers reference images that serve as correct answer images for inspection. At this time, the inspection apparatus 110 waits in reference image read mode. When a reference image registration print job is transmitted from the client PC 130 to the image forming apparatus 100, printing is executed in the image forming apparatus 100 based on the reference image registration print job, and a printed material is outputted. When the inspection apparatus 110 detects the conveyance of the printed material, the printed material is scanned on both sides by the image reading unit 310 and two pages of scanned images for each sheet, one for the front and one for the back, are stored as reference images in the RAM 303 of the inspection apparatus 110. In the first embodiment, a pair of front and back sides for a front and back coincidence inspection function in the following description is assumed to be determined when creating reference images.

Next, the processing proceeds to step S403, and upon accepting inspection settings, the CPU 302 stores various inspection setting values for an inspection area, an inspection level, and the like in the RAM 303 of the inspection apparatus 110. Step S403 will be described later in detail.

Then, the processing proceeds to step S404, and the CPU 302 accepts an inspection print job from the client PC 130 via the image forming apparatus 100. The image forming apparatus 100 executes printing in accordance with the print job and conveys a printed material obtained by printing to the inspection apparatus 110. Thus, upon detecting the conveyance of the printed material, the inspection apparatus 110 uses the image reading unit 310 to scan the printed material and stores the scanned images in the RAM 303 of the inspection apparatus 110. Then, the scanned images obtained by scanning by the image reading unit 310 are respectively compared with the corresponding reference images registered in step S402, and printed image inspection is performed using the inspection setting values set in step S403. Further, when performing data inspection, data inspection is performed based on the glyph font registered in step S401 and the inspection settings set in step S403, and the processing is terminated. The inspection execution of step S404 will be described later in detail.

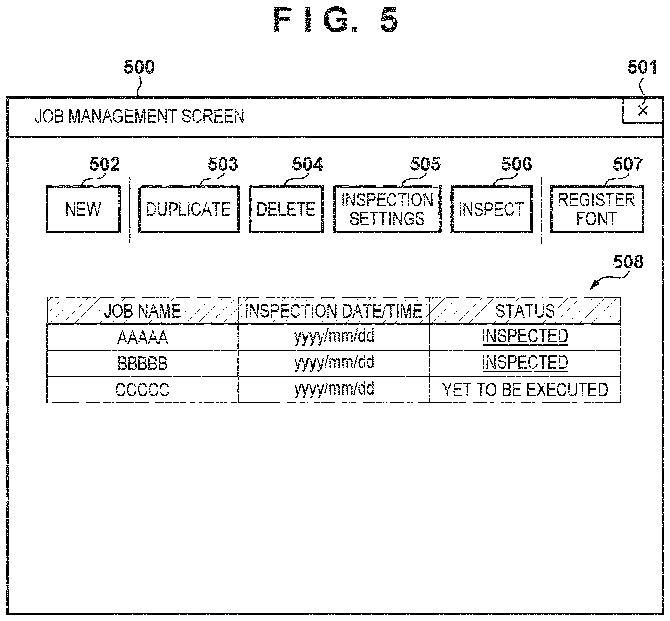

FIG. 5 depicts a view illustrating an example of a job management screen 500 displayed on the UI unit 320 of the inspection apparatus 110 according to the first embodiment.

The job management screen 500 is displayed when the inspection apparatus 110 is started. Alternatively, it may be displayed when an application is started by an operator operation via the UI unit 320. Each of the font registration, reference image registration, inspection setting, and inspection steps can be transitioned to from the job management screen 500. A close button 501 is a button for closing the display of the job management screen 500. A new button 502 is a button for creating a new inspection job, and reference image registration is transitioned to when the new button 502 is pressed. That is, it is a button for starting the processing of step S402 of FIG. 4. A duplicate button 503 is a button for duplicating an inspection job that has already been created. Here, an inspection job selected in an inspection job list 508 can be duplicated by pressing the duplicate button 503. By duplicating an inspection job in this way, a new inspection job can be created and executed without processing such as reference image registration and inspection settings. A delete button 504 instructs deletion of an inspection job selected in the inspection job list 508. Here, it is also possible to delete a plurality of inspection jobs collectively by selecting a plurality of inspection jobs in the inspection job list 508 and pressing the delete button 504.

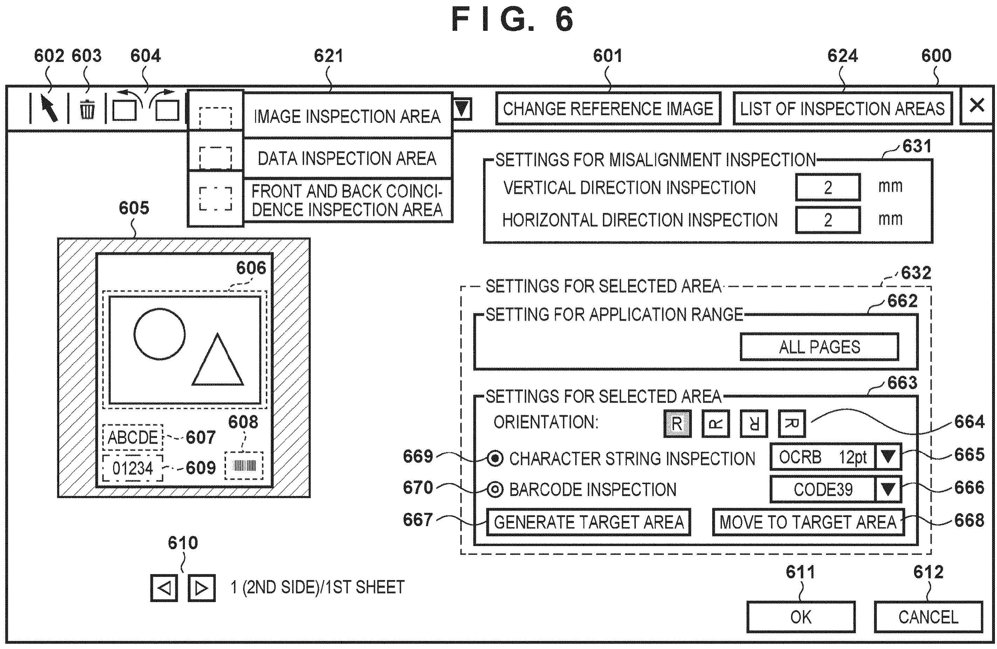

An inspection setting button 505 performs inspection settings for an inspection job for which reference image registration has been completed. That is, it is a button for executing the processing of step S403. An inspection setting screen illustrated in FIG. 6 is transitioned to when the inspection setting button 505 is pressed. An inspection button 506 is a button for instructing to start execution of an inspection job for which reference image registration and inspection settings have been completed. That is, it is a button for starting the inspection processing of step S404. A font registration button 507 is used to instruct registration of a glyph font. That is, it is a button for starting the processing of step S401.

Next, inspection settings will be described with reference to FIG. 6.

FIG. 6 depicts a view illustrating an example of an inspection setting screen 600 displayed on the UI unit 320 of the inspection apparatus 110 according to the first embodiment.

A reference image change button 601 is a button used when changing a reference image. A button 602 is an inspection area selection button and is a button that the operator presses when the operator wants to select an inspection area that has already been set. A button 603 is an inspection area delete button and is a button that the operator presses when the operator wants to delete the selected inspection area. Buttons 604 are buttons for rotating the image displayed in a display area 605.

The display area 605 is a display area (preview area) for displaying a read reference image. When there are a plurality of read sheets, the displayed reference image is switched using buttons 610. The front and back of a read sheet can also be switched using the buttons 610. Specifically, the sheets are switched in the order of the front of the first sheet, the back of the first sheet, the front of the second sheet, and the back of the second sheet each time the right arrow button 610 is pressed.

An OK button 611 is a button for storing the settings of the inspection setting screen 600 and transitioning to the job management screen 500 illustrated in FIG. 5. Further, upon a press of the OK button 611, an inspection screen (not illustrated) may be transitioned to and inspection may be automatically started. A cancel button 612 is a button for transitioning to the job management screen 500 illustrated in FIG. 5 without storing the settings of the inspection setting screen 600.

A list box 621 is used when creating various inspection areas. Here, a printed image inspection area, a data inspection area, and a front and back coincidence inspection area can be selected. After pressing one of the inspection types in the list box 621, the operator can set an inspection area for the inspection selected in the list box 621 in the reference image displayed in the display area 605. For example, in the display area 605, an area 606 indicates a setting example of a printed image inspection area. Further, areas 607 and 608 indicate data inspection areas. Further, an area 609 shows a front and back coincidence inspection area. In the case of performing single-sided printing in the image forming apparatus 100, it is not necessary to perform front and back coincidence inspection, and a front and back coincidence inspection area setting may thus be hidden in the list box 621.

In the first embodiment, in order to mainly describe front and back coincidence inspection, description will be given assuming that "front and back coincidence inspection area" is selected in the list box 621 and front and back coincidence inspection is performed for the area 609.

A setting area 631 is an area for print misalignment inspection settings, and an allowable amount of print misalignment from the reference image is set. FIG. 6 illustrates an example in which the operator has designated to detect misalignment where the misalignment amount is 2 mm or more. That is, the value designated by the operator here corresponds to a threshold in misalignment detection. If misalignment that is greater than or equal to the threshold set here is detected, it is determined as inspection NG.

A setting area 632 is a UI group for performing settings for the area currently selected in the display area 605. In FIG. 6 is an example of display at the time of settings for front and back coincidence inspection.

Here, description will be given assuming that the currently selected area is the area 609, but settings may be similar for the character area 607 or the barcode area 608. In the display area 605, a selected area is assumed to be displayed to be distinguishable from a non-selected area. Distinguishability is realized by changing the line thickness, line type, or color of the area frame, the color or pattern inside the area, or the like. In the example of FIG. 6, the frame of the area 609 is displayed using a thick line. A setting area 662 sets the application range for the selected area. If nothing is selected, the selected inspection area is placed only on the page currently displayed in the display area 605. Meanwhile, if "all pages" is selected as shown in FIG. 6, the selected inspection area is placed on all pages.

In a setting area 663, settings for the currently selected front and back coincidence inspection area are performed. The values set in the setting area 663 are stored in the RAM 303 in association with the inspection area 609, for example. In a selection area 664, the orientation of characters and barcodes is selected.

Further, in the setting area 663, an area selected for front and back coincidence inspection is a character area or a barcode inspection area is selected using buttons 669 and 670. In the case of character string inspection for which the button 669 is selected, font type selection 665 is performed. Further, in the case of barcode inspection for which the button 670 is selected, barcode type selection 666 is performed.

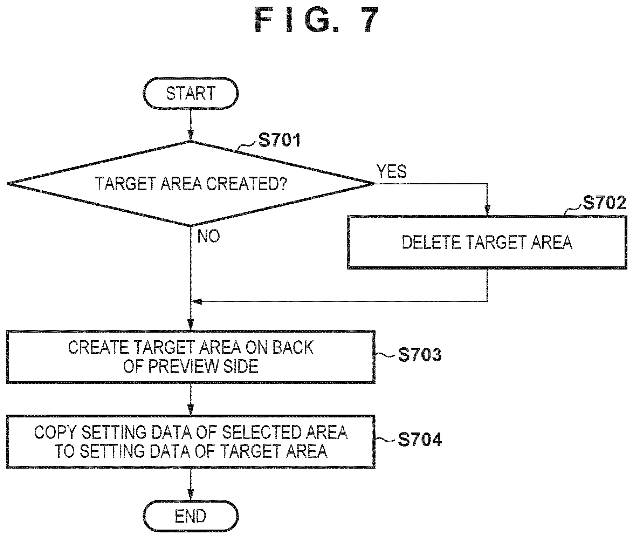

Furthermore, a target area generation button 667 and a move-to-target-area button 668 are arranged. When the currently selected front and back coincidence inspection area is on the front side, a function to automatically generate the same front and back coincidence inspection area on the back side is executed by pressing the target area generation button 667. Further, when the currently selected front and back coincidence inspection area is on the back side, a function to automatically generate the same front and back coincidence inspection area on the front side is executed by pressing the target area generation button 667. The operation when the target area generation button 667 is pressed will be described later in detail with reference to a flowchart of FIG. 7.

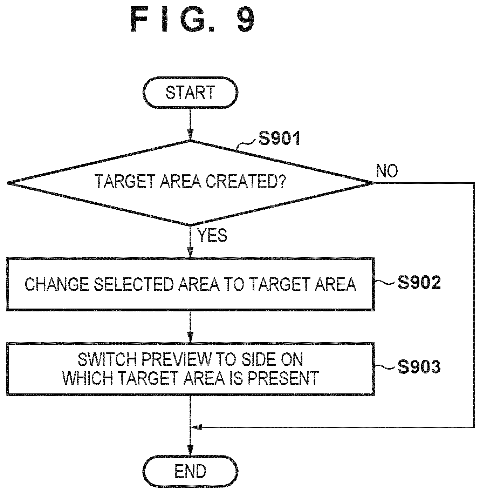

Further, when the currently selected front and back coincidence inspection area is on the front side, the selected area is moved to the target front and back coincidence inspection area on the back side by pressing the move-to-target-area button 668. Further, when the currently selected front and back coincidence inspection area is on the back side, the selected area is moved to the target front and back coincidence inspection area on the front side by pressing the move-to-target-area button 668. The operation when the move-to-target-area button 668 is pressed will be described later in detail with a flowchart of FIG. 9.

FIG. 7 is a flowchart for explaining processing when the target area generation button 667 is pressed in the inspection apparatus 110 according to the first embodiment. The processing described in this flowchart is realized by the CPU 302 of the inspection apparatus 110 deploying program code stored in the ROM 304 into the RAM 303 and executing the program code. Further, the processing indicated in this flowchart is started by the CPU 302 detecting a press of the target area generation button 667.

In step S701, the CPU 302 determines whether there already is a target area for the selected front and back coincidence inspection area. Here, if it is determined that there is the target area, the processing proceeds to step S702, the target area is deleted, and the processing proceeds to step S703. In the first embodiment, an example in which one area is set for each of the front and back sides as an area for front and back coincidence inspection for barcode images or character images is described. Therefore, if there already is a target area, it is highly likely due to an erroneous operation, and thus, in step S702, the already set target area is deleted. The flowchart of FIG. 7 may be forcibly terminated after a warning is issued in step S702 and is not limited in the present disclosure. Further, the processing of steps S701 and S702 may be skipped when front and back coincidence inspection where a plurality of inspection areas set on each of the front and back sides is possible.

In addition, when there already is the target area for the selected front and back coincidence inspection area, processing for graying out or the like may be performed so as to prevent pressing of the target area generation button 667 such that the processing of steps S701 and S702 does not need to be executed; this is not limited in the present disclosure. Here, description will be given assuming that there is a selected inspection area for front and back coincidence inspection on the front side and that a corresponding inspection area for front and back coincidence inspection on the back side is a target area, for example, but the opposite is also possible.

If it is determined in step S701 that there is no target area, the processing proceeds to step S703. In step S703, the CPU 302 creates a target area for the selected front and back coincidence inspection area. That is, an inspection area is created at a corresponding position on the back side of the side being displayed as a preview on the display area 605.

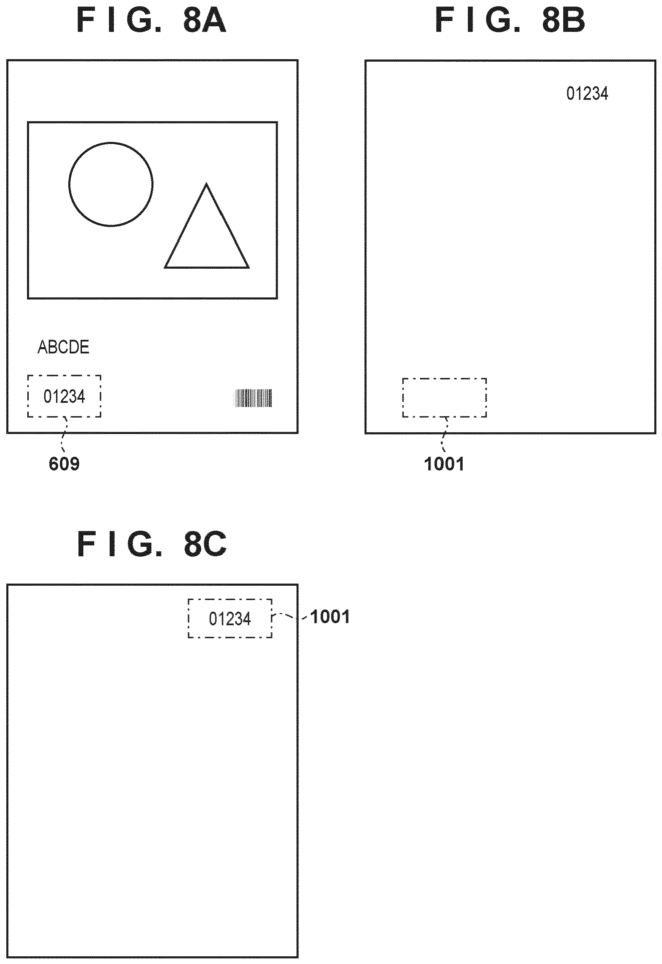

FIGS. 8A to 8C depict views for explaining an example of creation of a target area in front and back coincidence inspection in the embodiment.

FIG. 8A illustrates a reference image of a selected side being displayed on the display area 605, and the selected front and back coincidence inspection area 609 is positioned in the lower left. FIG. 8B illustrates the back side of the reference image of FIG. 8A and illustrates a state in which by step S703 being executed, a front and back coincidence inspection target area 1001 has been automatically generated in the same lower left position in the back side of the image of FIG. 8A, for example. FIG. 8C illustrates an example in which the target area 1001 has been moved to the upper right upon acceptance of position adjustment by the operator. Further, for reasons such as an operation error, if there is no area that is desired to be subject to front and back coincidence inspection on the side in FIG. 8B, it is possible to accept deletion of the target area 1001 by the delete button 603.

Further, a method in which information in the front and back coincidence inspection area 609 on the front side in FIG. 8A is digitized by OCR processing and decoding processing, then an area that includes that information is automatically searched for in the area on the back side, and an area that includes the same information is set as the target area 1001 as illustrated in FIG. 8C, for example, is conceivable.

Next, the processing proceeds to step S704, and the CPU 302 obtains setting values for the orientation in the area 664, the font selection 665 for character string inspection, and the barcode type selection 666 set for the selected front and back coincidence inspection target area 609. Then, each obtained setting value is copied as data associated with the area 1001 in the RAM 303 as settings for the target area 1001 created in step S703.

As described above, with a press of the target area generation button 667, it is possible to create a target area on the back side of the selected side being displayed in the display area 605, and set, for that target area, the same setting values as the selected area on the selected side being displayed in the display area 605.

FIG. 9 is a flowchart for explaining processing when the move-to-target-area button 668 is pressed in the inspection apparatus 110 according to the first embodiment. The processing described in this flowchart is realized by the CPU 302 of the inspection apparatus 110 deploying program code stored in the ROM 304 into the RAM 303 and executing the program code. Further, the processing indicated in this flowchart is started by the CPU 302 detecting a press of the move-to-target-area button 668.

In step S901, the CPU 302 determines whether there already is a selected front and back coincidence inspection target area. If there is no target area, the processing cannot be executed and thus is terminated. In this case, the move-to-target-area button 668 may be grayed out or the like such that it cannot be pressed.

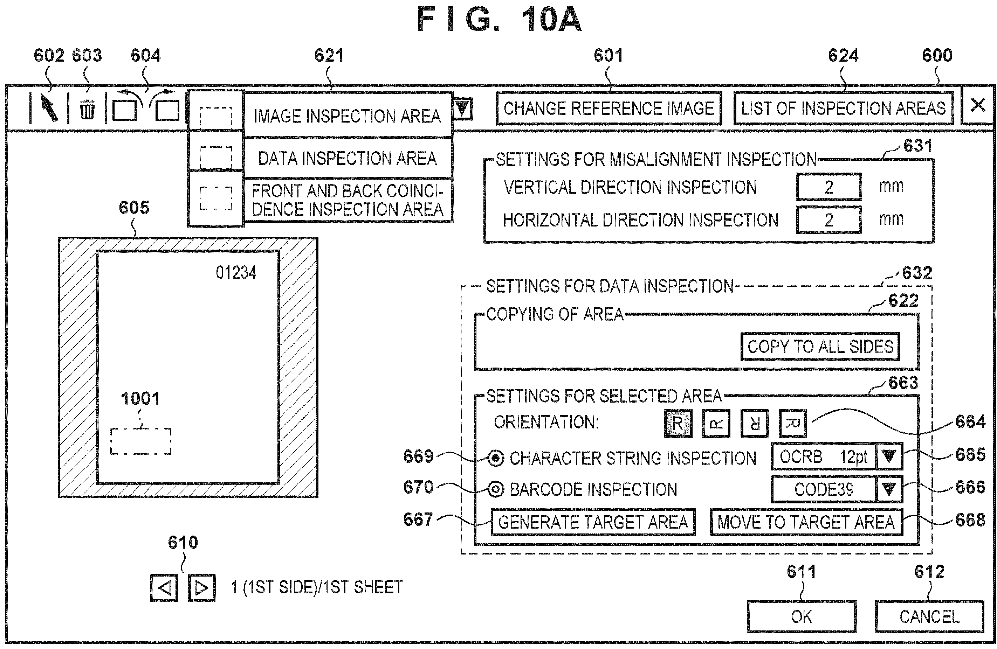

Meanwhile, if it is determined in step S901 that there is a target area, the processing proceeds to step S902. In step S902, the CPU 302 changes the selection to the target area of the selected front and back coincidence inspection area. Next, the processing proceeds to step S903, and the CPU 302 displays a reference image of the page in which the target area is present in the display area 605. At this time, which area is the target area may be made easily identifiable by displaying the newly selected target area in an emphasized manner using the line type, color, blinking, or the like so as to be evident. With the processing of steps S902 and S903, the inspection setting screen 600 will be as illustrated in FIG. 10A, for example.

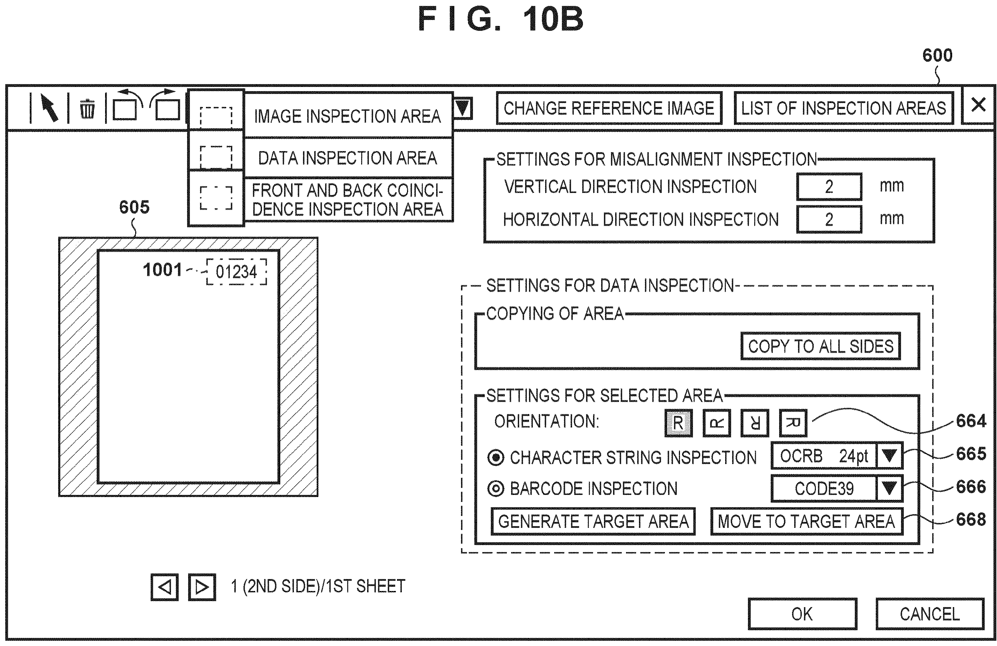

FIGS. 10A and 10B depict views respectively illustrating examples of transition in the inspection setting screen 600 when an inspection target area is moved in the first embodiment.

In the screen example of FIG. 10A, an image of the back side of the reference image of the area 605 of FIG. 6 is displayed in the display area 605, and the target area 1001 created in step S703 is positioned in the lower left of the reference image. Meanwhile, the area in which front and back coincidence inspection is desired is present in the upper right. Therefore, the CPU 302 can accept adjustment of the position and size of the target area. Further, it is also possible to change only the settings for the target area by accepting changes of the orientation in the area 664, the character type 665, and the barcode type 666.

FIG. 10B illustrates the inspection setting screen 600 when the target area 1001 is moved by changing the settings from FIG. 10A. In FIG. 10B, the target area 1001 is moved to the upper right, and the character type is changed.

In the embodiment, description is given assuming that there is one pair of front and back coincidence inspection areas in one sheet, but it is possible to set a plurality of pairs in one sheet.

As described above, when the move-to-target-area button 668 is pressed, a new front and back coincidence inspection area is selected as a target area, and an image that includes the newly selected target area can be displayed in a preview on the display area 605.

Next, in the inspection setting screen 600 of FIG. 6, upon detecting a press of an inspection area list 624, the CPU 302 displays a list of various inspection areas that have been set.

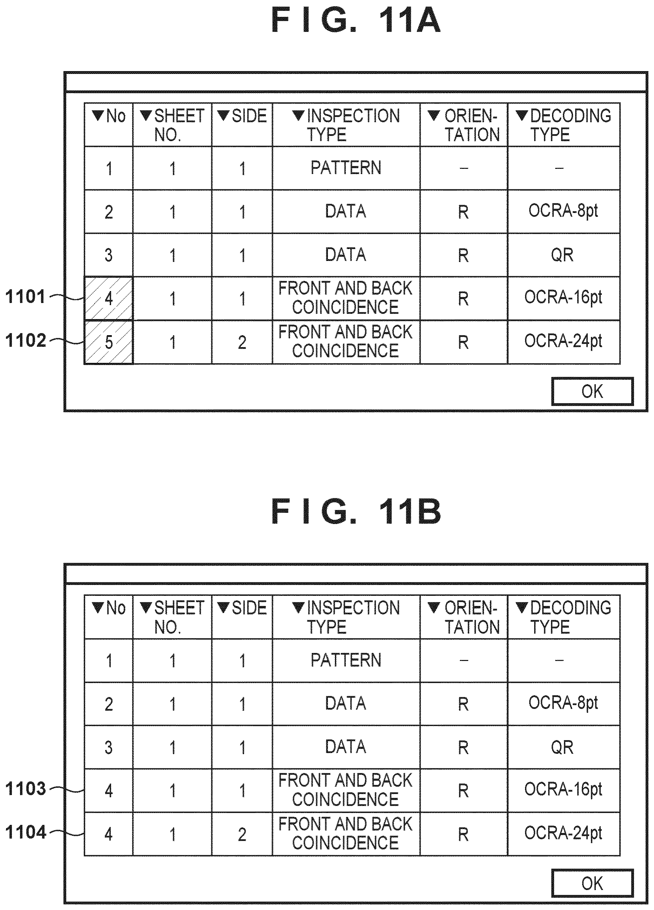

FIGS. 11A and 11B depict views respectively illustrating examples of display of a list of inspection areas.

In FIG. 11A, a row 1101 of the inspection area list indicates inspection settings for the front side for front and back coincidence inspection, and a row 1102 of the inspection area list indicates inspection settings for the back side for front and back coincidence inspection. Here, "1" in the side column indicates the front side, and "2" indicates the back side. When a press is detected in the inspection number column of the inspection area list, the corresponding inspection area enters a selected state. For example, upon detecting a press in the inspection number column in the row 1101, the CPU 302 displays the inspection setting screen 600 of FIG. 6 and causes the front and back coincidence inspection area 609 to be in a selected state. An inspection type, an orientation, and a decoding type in the inspection area list can also be edited or changed by being directly inputted on the screen of FIG. 11A. Furthermore, the rows 1101 and 1102 of the inspection area list may be clearly indicated to be a front and back coincidence inspection pair by being displayed using the same manner of emphasis, such as in the same color or hatching.

Further, as illustrated in rows 1103 and 1104 of the inspection area list of FIG. 11B, the inspection number may be set to the same number (4 here) to indicate that they are targets for front and back coincidence inspection.

Upon detecting a press of OK button 611 in the inspection setting screen 600, the CPU 302 inspects whether inspection settings have been set correctly.

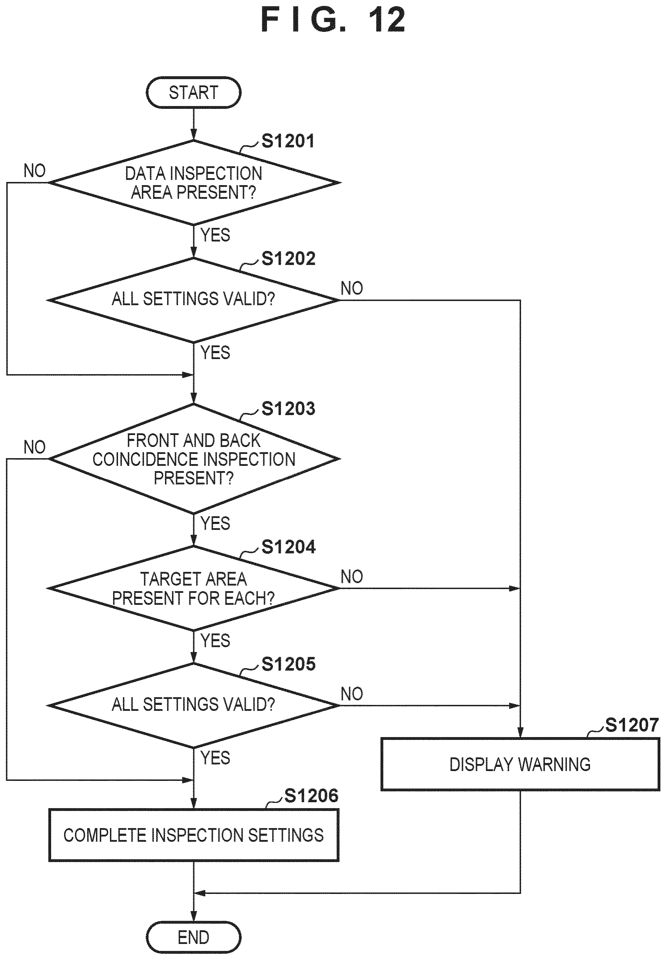

FIG. 12 is a flowchart for explaining a method of confirming inspection settings by the inspection apparatus 110 according to the first embodiment. The processing described in this flowchart is realized by the CPU 302 executing a program deployed into the RAM 303. The processing is started by detecting a press of the OK button 611 of the inspection setting screen 600, for example.

In step S1201, the CPU 302 determines whether data inspection is set in the inspection items. If it is determined that the data inspection is set, the processing proceeds to step S1202, and the CPU 302 determines whether all the settings for data inspection area are valid. That is, it is determined whether the orientation of characters and barcodes, the character type in the case of character string inspection, and the barcode type and the like in the case of barcodes are set. Here, if it is determined that there is a defect in the setting of the data inspection area, the processing proceeds to step S1207, and the CPU 302 performs an alert display to UI unit 320 and terminates the process. The warning display at this time may clearly indicate that the settings are incomplete, where the setting error is, and the like.

In step S1202, if the CPU 302 determines that all the settings for the data inspection area are valid, the processing proceeds to step S1203. In step S1203, the CPU 302 determines whether front and back coincidence inspection, which has been described with reference to FIG. 6, is in the inspection items. If it is determined that the front and back coincidence inspection is present in the inspection items, the processing proceeds to step S1204, and if not, the processing proceeds to step S1206. In step S1204, the CPU 302 determines whether target areas have been set for all front and back coincidence inspections. For example, if the target area generation button 667 has not been pressed, front and back coincidence inspection is determined to be incomplete and the processing proceeds to step S1207. Meanwhile, in step S1204, if the CPU 302 determines that there are target areas, the processing proceeds to step S1205, and the CPU 302 determines whether each setting for front and back coincidence inspection is valid. That is, it is confirmed whether the orientation in the area 664 of characters and barcodes, the character type 665 in the case of character string inspection, and the barcode type 666 in the case of barcodes are set. In step S1205, if the CPU 302 determines that each setting for front and back coincidence inspection is valid, the processing proceeds to step S1206, and the CPU 302 displays the job management screen 500 illustrated in FIG. 5, for example, and terminates the processing. Alternatively, upon determining in step S1205 that each setting for front and back coincidence inspection is not valid, the CPU 302 proceeds to step S1207.

With the above processing, it is possible to, when data inspection or front and back coincidence inspection is set, for example, determine whether target areas to be subject to inspection have been set and various settings have been made for the target areas, and allow inspection to be executed when that is determined to be the case.

When inspection settings are completed with the above operations, an inspection job is added to the inspection job list 508, and it becomes possible to select the inspection job and press the inspection button 506.

In the job management screen 500 of FIG. 5, when an inspection job is selected from the inspection job list 508 and the inspection button 506 is pressed, or when the inspection execution of step S404 is transitioned to, the CPU 302 enters an inspection standby state. In the inspection standby state, when a printed material is conveyed to the inspection apparatus 110, the image reading unit 310 reads the printed material and generates scanned images. Then, the inspection processing unit 305 performs inspection in accordance with the inspection setting. Each inspection has been described above, and thus description will be omitted here. Then, when all the inspections are completed, an inspection result will be displayed.

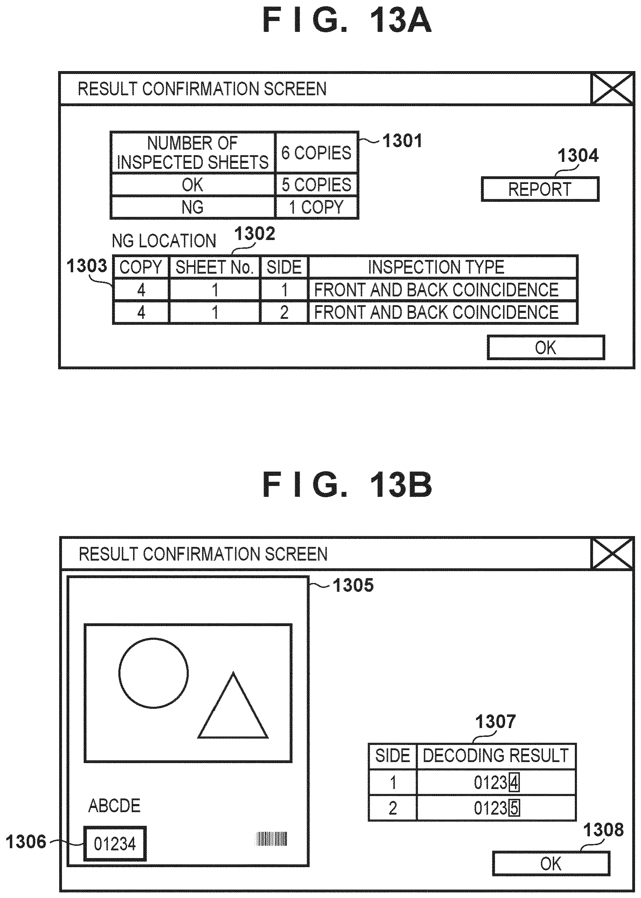

FIGS. 13A to 13C depict views respectively illustrating examples of a screen for displaying an inspection result in the inspection apparatus 110 according to the first embodiment. These screens are displayed on the UI unit 320.

A table 1301 of FIG. 13A displays an overall inspection result. In the first embodiment, a case where double-sided printing is performed on single sheets (with a two-page original) and six copies are printed is assumed. In FIG. 13A, an example in which the number of inspected sheets is a total of six copies, where five copies are OK, and one copy (fourth copy) is NG is illustrated.

When a field 1303 of a detailed list 1302 on the screen of FIG. 13A is clicked, the CPU 302 displays a screen of FIG. 13B for confirming the details of a front and back coincidence inspection result. In this case, a screen for confirming the details of one side (front side) of sheet number 1 of the fourth copy is displayed.

In the front and back coincidence inspection detail confirmation screen of FIG. 13B, an inspection image read by the image reading unit 310 at the time of inspection execution is displayed on an inspection image display portion 1305. Further, an inspection area 1306 deemed to be inspection NG is displayed in an emphasized manner. In a front and back coincidence inspection decoding result list 1307, numbers ("4" and "5" here), symbols, or the like deemed to not coincide are displayed in an emphasized manner so as to be evident. In the example of FIG. 13B, an example in which the character string of the inspection area 1306 is "01234" on the front side, and "01235" on the back side, and thus, they do not coincide is illustrated. Upon detecting a press of an OK button 1308 on the front and back coincidence inspection detail confirmation screen, the CPU 302 closes this screen and returns to the screen of FIG. 13A.

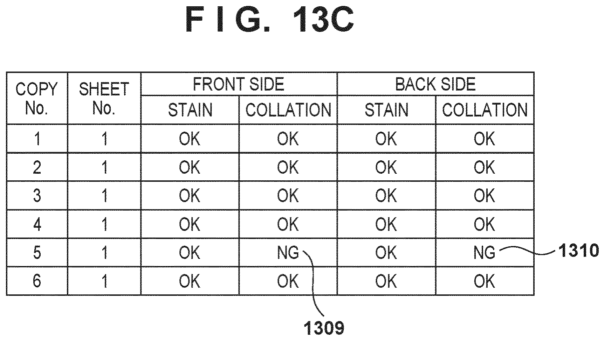

Upon detecting a press of a report button 1304 on the inspection results display screen of FIG. 13A, the CPU 302 creates a table as illustrated in FIG. 13C and issues it as a report. The table may be stored as a PDF file or a CSV file on the client PC 130 or the print server 140 or may simply be displayed on a screen. Regarding NG 1309 and NG 1310 in the table, NG is determined in front and back coincidence inspection, and thus the front and back sides are both determined to be NG. In the case of front and back coincidence inspection, it cannot be determined whether the correct value is on the front or the back, and thus both the front and back are displayed as NG, but this is only one example and may be differently displayed in front and back coincidence inspection.

As described above, according to the first embodiment, it is possible to easily switch selection between inspection areas on the front and back sides to be subject to inspection in the front and back coincidence inspection. Thus, it is possible to greatly reduce the burden on the user required to set an inspection area in front and back coincidence inspection.

### [Second Embodiment]

In a second embodiment, application in a case where an RIP image (raster image) generated by the print server 140 or the image processing unit 205 as a print image is registered as a reference image will be described in contrast to the method of setting a scanned image as a reference image, which has been described in the first embodiment. The description of processing similar to that of the first embodiment will be omitted as appropriate. Further, since the configuration of the system and the hardware configurations and the like of the image forming apparatus 100, the inspection apparatus 110, and the like according to the second embodiment are similar to those of the above first embodiment, the description thereof will be omitted.

In the second embodiment, the processing from a registration work before the start of inspection to an execution of inspection will be described with reference to the flowchart of FIG. 4 described above.

Description will be omitted for the processing of step S401 of FIG. 4 because it is the same as in the first embodiment. Next, in step S402, the print server 140 or the image forming apparatus 100 creates raster images of all the pages as reference images and transfers them to the inspection apparatus 110. However, unlike the first embodiment, image data transferred from the print server 140 or the image forming apparatus 100 generally does not have front and back information at the time of actually printing. That is, determination of a pair of two images to be printed on the front and back of the same sheet at the time of double-sided printing is not present in the image data and the pair are determined by the order of printing.

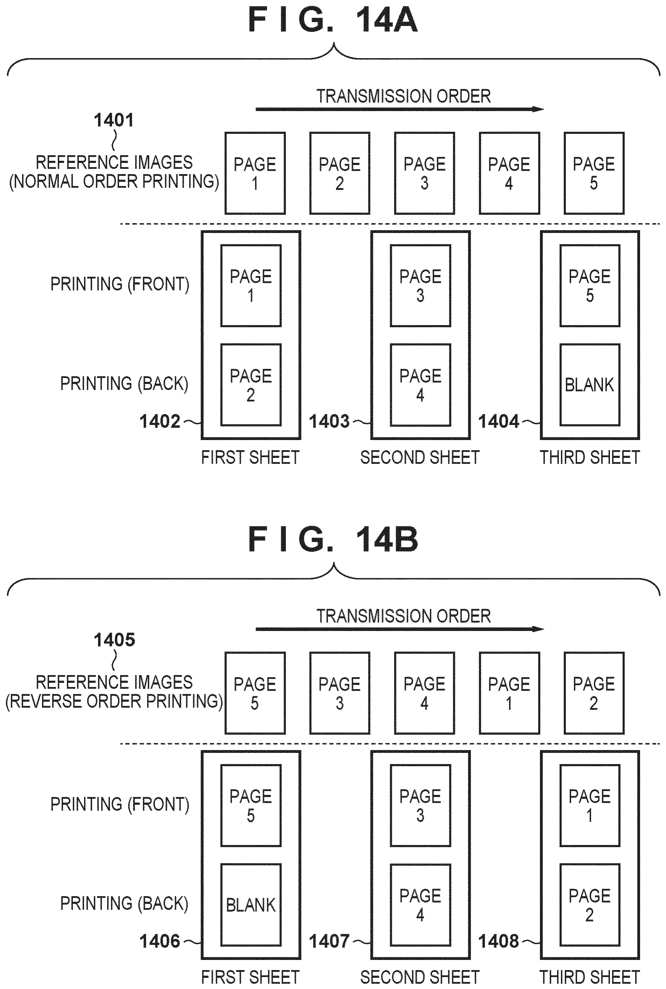

FIGS. 14A and 14B are schematic diagrams illustrating an example of the order in which reference images are transferred and the front and back at the time of actual printing according to a second embodiment.

FIG. 14A illustrates an example of normal order printing (printing in order from the first page). The example of FIG. 14A indicates a front and back relationship of a five-page printed material. Reference images 1401 are transferred in page order from the first to the fifth page. Meanwhile, in printing, the first and second pages are printed on a first sheet 1402 as the front and back. Similarly, the third and fourth pages are printed on a second sheet 1403 as the front and back. However, since the back side of the fifth page is blank, a third sheet 1404 is single-sided printing, and front and back coincidence inspection cannot be performed.

For example, an example in which an image of the fifth page is displayed in the display area 605 in the inspection setting screen 600 of FIG. 6 will be described. When a press of the front and back coincidence inspection target area generation button 667 is detected in this state, a warning pop-up screen is outputted, and generation of an inspection area on the back side is rejected. Alternatively, front and back coincidence inspection of the list box 621 may be hidden.

FIG. 14B illustrates an example of reverse order printing (printing in order from the fifth page). The example of FIG. 14B indicates a front and back relationship of a five-page printed material. Reference images 1405 are transferred in reverse order from the fifth to the first page. Since the back side of the fifth page is blank, a first sheet 1406 is single-sided printing, and front and back coincidence inspection cannot be performed on the first sheet 1406. Front and back coincidence inspection is possible for each of a second sheet 1407 and a third sheet 1408.

However, when the inspection apparatus 110 cannot obtain printing order information from the print server 140 or the image forming apparatus 100, the front and back relationship of each sheet is unknown at this time.

In step S403, upon accepting inspection settings, the CPU 302 stores various setting values for an inspection area, an inspection level, and the like in the RAM 303 of the inspection apparatus 110. Step S403 in the second embodiment will be described later in detail. Since step S404 of FIG. 4 is the same as in the first embodiment, description thereof will be omitted.

In the second embodiment, when the front and back relationship at the time of printing is unknown, even if the target area generation button 667 is pressed, the back side of the side displayed in the display area 605 cannot be identified. Therefore, the page for which front and back coincidence inspection has been set first and the next page are set as the front and back. That is, a target inspection area is generated in the next page.

For example, the example of FIG. 14A is normal order printing. By setting front and back coincidence inspection in the first reference image (page 1) of the reference images 1401, it is determined that page 1 is the front side, and the front and back of the first sheet 1402 to the third sheet 1404 are determined. However, since the back side of the third sheet 1404 is blank, when page 5 is displayed using the buttons 610, it may be made such that front and back coincidence inspection cannot be set on the third sheet 1404.

Meanwhile, the example of FIG. 14B is odd page-based reverse order printing. In the case of odd page-based reverse order printing, by setting front and back coincidence inspection in page 3, which is the second page of the reference images 1405, it is determined that page 3 is the front side, and the front and back of the first sheet 1406 to the third sheet 1408 are determined.

Since the front and back relationship for front and back coincidence inspection can thus be determined by a press of the target area generation button 667, it is possible to cause the move-to-target-area button 668 to function in the second embodiment, as in the first embodiment.

As described above, according to the second embodiment, even if the front and back relationship of image data cannot be obtained, by simply switching the selection of an inspection area to be subject to front and back coincidence inspection, it is possible to greatly reduce the burden required for setting an inspection area.

### [Third Embodiment]

In the above second embodiment, an example in which by facilitating selection and setting of an inspection area in front and back coincidence inspection, it is possible to facilitate setting of a front and back coincidence inspection area in reference images where the front and back of printing sides are unknown has been described. In a third embodiment, another example of the inspection setting screen for performing inspection settings of the second embodiment and displayed on the UI unit 320 of the inspection apparatus 110 will be described. Only the differences from the above embodiment will be described.

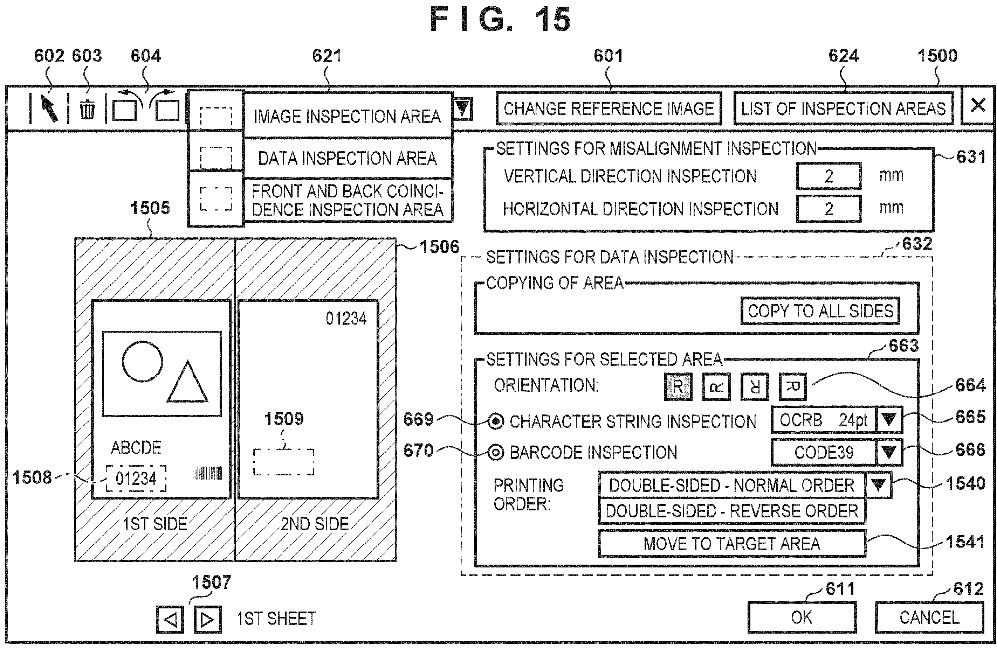

FIG. 15 depicts a view illustrating an example of an inspection setting screen 1500 displayed on the UI unit 320 of the inspection apparatus 110 according to the third embodiment. In FIG. 15, elements similar to those of above FIG. 6 are denoted by the same reference numerals, and description thereof will be omitted.

A display area 1505 is an area for displaying the front side (side 1) at the time of printing, and a display area 1506 is an area for displaying the back side (side 2) at the time of printing.

As described in the second embodiment, when raster images are set as reference images, such as when it is unknown whether it is normal order printing or reverse order printing as described in above FIG. 14, the front and back relationship at the time of printing cannot be properly displayed in the display areas 1505 and 1506. To solve this, in the third embodiment, a list box 1540 for setting the printing order is arranged. In the list box 1540, "double-sided - normal order printing" as in FIG. 14A and "double-sided - reverse order printing" as in FIG. 14B, for example, can be selected. That is, a printing mode that is double-sided printing and the printing order (normal order printing or reverse order printing) can be designated. When "double-sided - normal order printing" is selected, since the pattern is that of the reference images 1401 in FIG. 14A, the front and back relationship at the time of printing follows the first sheet 1402 to the third sheet 1404. For example, in the case of the first sheet 1402, the first page is displayed in the display area 1505 and the second page is displayed in the display area 1506. Further, when "double-sided - reverse order printing" is selected, since the pattern is that of the reference images 1405 in FIG. 14B, the front and back relationship at the time of printing follows the first sheet 1406 to the third sheet 1408. For example, in the case of the first sheet 1406, the fifth page is displayed in the display area 1505, and nothing is displayed in the display area 1506 due to it being blank.

If the printing mode and the printing order (normal order or reverse order) can be obtained from the print server 140 or the image forming apparatus 100, they may be set as the initial value of the list box 1540. Further, if the printing mode and the printing order can surely be obtained from the print server 140 or the image forming apparatus 100, the list box 1540 may be hidden.

Buttons 1507 are buttons for changing the sheet number. For example, when the right arrow is pressed while the first sheet 1402 is being displayed as in FIG. 14A, pages 3 and 4 of the second sheet 1403 will respectively be displayed in the display areas 1505 and 1506 of FIG. 14A.

Further, in the display area 1505, an area 1508 is set as a front and back coincidence inspection area. Furthermore, in the display area 1506, an area 1509 is set as a target area of the area 1508.

A move-to-target-area button 1541 has a function obtained by integrating the target area generation button 667 and the move-to-target-area button 668 of FIG. 6. That is, when the move-to-target-area button 1541 is pressed while the area 1508 is selected as a front and back coincidence inspection area but the area 1509 is not set, the screen 1500 of FIG. 15 is displayed. That is, in the display area 1506, a state in which the area 1509 is generated and selected as a target area of the area 1508 is entered. A configuration in which, if the area 1509 had already been generated, a press of the move-to-target-area button 1541 causes a transition from a state in which the area 1508 is selected to a state in which the area 1509 is selected may be taken.

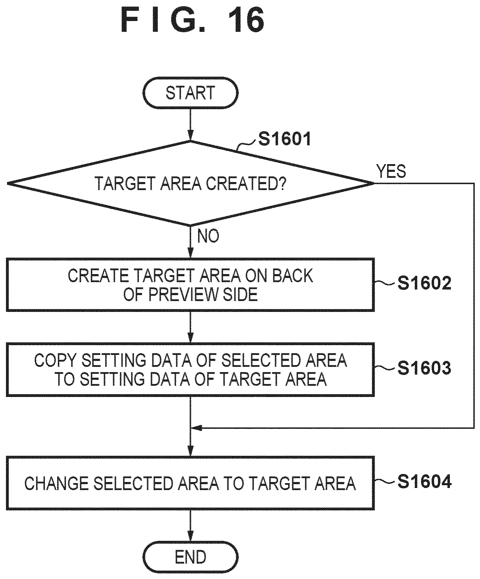

FIG. 16 is a flowchart for explaining processing when the move-to-target-area button 1541 is pressed in the inspection apparatus 110 according to the third embodiment. The processing described in this flowchart is realized by the CPU 302 executing a program deployed into the RAM 303. Upon detecting a press of the move-to-target-area button 1541, the CPU 302 executes the processing of steps S1601 to S1604 of FIG. 16.

In step S1601, the CPU 302 determines whether a target area of the selected front and back coincidence inspection area is present. If it is determined that the target area is present, the processing proceeds to step S1604, and the selection is switched so as to select the target area, and the processing is terminated.

Meanwhile, in step S1601, if the CPU 302 determines that the target area is not present, the processing proceeds to step S1602, and the CPU 302 creates a target front and back coincidence inspection area (target area) on the back side of the selected front and back coincidence inspection area. For example, when the front and back coincidence inspection area 1508 of the display area 1505 of FIG. 15 is selected, the front and back coincidence inspection area 1509 is generated as the target area on the back side display area 1506. Then, the processing proceeds to step S1603, and similarly to above step S704, the CPU 302 copies setting values for the orientation, the font selection for character string inspection, the barcode type selection, and the like set for the selected front and back coincidence inspection area 1508 as data associated with the target area 1509 in the RAM 303. Thus, the processing of steps S1601 to S1603 is similar to the processing when the target area generation button 667 is pressed described in FIG. 7.

Next, the processing proceeds to step S1604, and the CPU 302 selects the target area as a front and back coincidence inspection area. For example, when the front and back coincidence inspection area 1508 of the display area 1505 of FIG. 15 is selected, the selection is changed to the front and back coincidence inspection area 1509 of the display area 1506. Further, on the contrary, when the front and back coincidence inspection area 1509 of the display area 1506 is selected, the selection is changed to the inspection area 1508 of the display area 1505.

As described above, according to the third embodiment, by obtaining a relationship between the front and back of reference images in front and back coincidence inspection, it is possible to easily switch selection between inspection areas to be a pair for front and back coincidence inspection. Thus, it is possible to greatly reduce the burden on the user required to set an inspection area even when reference images where the front and back of printing sides are unknown are used.

### Other Embodiments

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An inspection system for inspecting a printed material, comprising:
reading means (310) for reading a first side and a second side of a printed material and obtaining respective scanned images;
inspection means (305) for inspecting the printed material by comparing the respective obtained scanned images with reference images;
designation means (S902) for designating an inspection area to be subject to the front and back coincidence inspection, in a case where front and back coincidence inspection for inspecting whether respective inspection areas of the first side and the second side of the printed material are the same is set in the inspection; and
switching means (S903) for switching between displaying a state in which a first inspection area of the first side to be subjected to the front and back coincidence inspection is selected and a state in which a second inspection area of the second side to be subjected to the front and back coincidence inspection is selected, in accordance with an operation of a user.

2. The inspection system according to claim 1, wherein the switching means generates and displays the second inspection area (S703) in a case where the second inspection area, which corresponds to the first inspection area, is not present.

3. The inspection system according to claim 1 or 2, wherein the designation means displays (605) a reference image that corresponds to the first side or the second side of the printed material and designates the inspection area (609) in the displayed reference image.

4. The inspection system according to any one of claims 1 to 3, further comprising:
creating means for creating a target inspection area (1001) of the first side or the second side that corresponds to the inspection area designated in a displayed reference image in a state in which a reference image that corresponds to the first side or the second side of the printed material is displayed.

5. The inspection system according to any one of claims 1 to 4, wherein the front and back coincidence inspection inspects whether information included in the first inspection area and information included in the second inspection area are the same in the scanned images of the first side and the second side of the printed material.

6. The inspection system according to any one of claims 1 to 5, wherein the switching means further displays a reference image that includes the first inspection area, which is selected, or a reference image that includes the second inspection area, which is selected, in accordance with switching of selected states.

7. The inspection system according to any one of claims 1 to 6, further comprising:
setting means for setting an inspection item for the designated inspection area.

8. The inspection system according to claim 7, wherein the inspection item includes information indicating whether information included in the inspection area includes a character string or a barcode, and in a case where the character string is included, includes an orientation of a character and information for character recognition, and in a case where the barcode is included, includes information indicating a type of the barcode.

9. The inspection system according to claim 8, further comprising:
display means for displaying a list of inspection items for the first inspection area and the second inspection area, and
means for allowing editing of an inspection item of a corresponding inspection area by instructing an inspection item displayed in the list.

10. The inspection system according to any one of claims 1 to 9, further comprising:
means for causing a designated inspection area designated by the designation means, or display of a selected inspection area, to be different from display of an inspection area that is not selected.

11. The inspection system according to claim 10, wherein the means for causing display of the inspection area to be different changes at least one of a thickness, a type, and a color of a line indicating the inspection area, or changes a color or a pattern of the inspection area.

12. The inspection system according to claim 4, wherein the creating means sets a setting value of an inspection item of the inspection area designated in the displayed reference image as a setting value of an inspection item of the target inspection area.

13. The inspection system according to any one of claims 1 to 12, further comprising:
result display means for displaying a result of the front and back coincidence inspection,
wherein, in a case where scanned image of the first inspection area and scanned image of the second inspection area do not coincide in the front and back coincidence inspection, the result display means displays non-coincidence for each of the first inspection area and the second inspection area.

14. The inspection system according to any one of claims 1 to 13, wherein the second inspection area is an inspection area that includes the same information as the first inspection area in a reference image.

15. The inspection system according to any one of claims 1 to 14, further comprising:
register means for registering the reference images by reading a plurality of printed materials.

16. The inspection system according to any one of claims 1 to 14, further comprising:
register means for registering the reference images based on data of a print job for generating printed materials.

17. The inspection system according to any one of claims 1 to 16, further comprising:
generation means for generating the inspection area with a side of a displayed reference image as the first side, in a case where the reference images are registered based on data of a print job for generating printed materials and the designation means designates to generate the inspection area in a state in which the reference image is displayed.

18. The inspection system according to claim 1, further comprising:
means for setting a printing mode and a printing order for generating the printed materials in a case where the reference images are registered based on data of a print job for generating printed materials.

19. A method of controlling an inspection system for inspecting a printed material, the method comprising:
reading a first side and a second side of a printed material and obtaining respective scanned images;
inspecting the printed material by comparing the respective obtained scanned images with reference images;
in a case where front and back coincidence inspection for inspecting whether respective inspection areas of the first side and the second side of the printed material are the same is set, designating an inspection area to be subject to the front and back coincidence inspection; and
in accordance with an operation of a user, switching between displaying a state in which a first inspection area of the first side is selected and a state in which a second inspection area of the second side is selected.

20. The method according to claim 19, wherein the switching is executed in accordance with an operation of a button by a user in a state in which the first inspection area or the second inspection area is selected.
